# EUROPÄISCHE PATENTSCHRIFT

(11) **EP 1 212 825 B1**
(45) Veröffentlichungstag und Bekanntmachung des Hinweises auf die Patenterteilung: **23.01.2008**
(21) Anmeldenummer: 00967595.0
(22) Anmeldetag: 14.09.2000
(51) Int. Cl.: H02K 7/116

(54) **ANTRIEB FÜR VERSTELLVORRICHTUNGEN IN KRAFTFAHRZEUGEN**
DRIVE FOR ADJUSTMENT DEVICES
MECANISME DE COMMANDE POUR DISPOSITIFS DE REGLAGE DANS DES VEHICULES AUTOMOBILES

(30) Priorität: 14.09.1999 DE 19944915
(43) Veröffentlichungstag der Anmeldung: 12.06.2002
(73) Patentinhaber: Brose Fahrzeugteile GmbH & Co. KG, 96450 Coburg (DE)
(72) Erfinder: SESSELMANN, Helmut, D-96523 Steinach (DE); FEDER, Roland, D-96479 Weitramsdorf (DE); HOFFMANN, Mathias, D-96145 Sesslach (DE); STENZEL, Manfred, D-96047 Bamberg (DE)
(74) Vertreter: Baumgärtel, Gunnar
(86) Internationale Anmeldenummer: PCT/DE2000/003262
(87) Internationale Veröffentlichungsnummer: WO 2001/020753

(56) Entgegenhaltungen:
- DE-A- 4 030 489
- DE-A- 4 412 898
- US-A- 3 879 623
- US-A- 5 272 938
- US-A- 5 914 159

## Beschreibung

Die Erfindung betrifft einen Antrieb für Verstellvorrichtungen in Kraftfahrzeugen, insbesondere für einen Fensterheber, gemäß dem Oberbegriff des Anspruchs 1 und dem Oberbegriff des Anspruchs 3.

Aus der DE-OS 22 10 243 ist eine elektrische Antriebseinrichtung zur Fensterverstellung in Kraftfahrzeugen bekannt, bei der an einem Elektromotor ein Umlaufrädergetriebe mit einem Sonnenrad und einem innenverzahnten Hohlrad sowie mehreren Planetenrädern gekoppelt ist. Die Planetenräder sind in axialer Ausrichtung mit zwei Zahnkränze mit unterschiedlichen Teilkreisdurchmessern ausgestattet, wobei die Zahnkränze mit dem größeren Teilkreisdurchmesser mit dem Sonnenrad und dem feststehenden innenverzahnten Hohlrad kämmen, Die Zahnkränze mit dem kleineren Teilkreisdurchmesser kämmen dagegen lediglich mit der Innenverzahnung eines als Seiltrommel ausgebildeten Abtriebselementes.

Aus der DE 40 30 489 A1 ist ein weiteres Planetengetriebe bekannt, bei dem das als Hohlrad ausgebildete Abtriebselement über Planetenräder angetrieben wird, die auf gehäusefesten Stützrädern umlaufen und das Hohlrad antrieben. Das Hohlrad ist axial beiderseits mit kreisscheibenförmigen Führungswangen versehen, die an ihrem Innenumfang über Wälzlager an Lageransätzen der Stützräder radial geführt sind und die Planetenräder gegen ein axiales Auswandern abstützen.

Solche Konstruktionen benötigen aufgrund der axial aufeinanderfolgenden Anordnung der Getriebeelemente sowie des radialen Überstandes der Planetenräder mit dem größeren Teilkreisdurchmesser bzw, der Führungswangen über das Abtriebselement einen relativ großen Bauraum. Weiterhin treten aufgrund der zentralen Lagerung auf dem Achszapfen große Kippmomente auf und eine aufwendige Lagerung des Abtriebselementes muß vorgesehen werden.

Aus der DE 44 12 898 A1 ist ein Antrieb bekannt, der einem Motor und ein mit diesem Motor gekoppeltes Zahnradgetriebe in einem mehrteiligen Gehäuse aufweist. Zur Übertragung und Untersetzung der vom Motor erzeugten Drehbewegung weist das Getriebe ein feststehendes Hohlrad und ein drehbares als Hohlrad ausgebildetes Abtriebselement mit Innenverzahnung auf, in die ein Getriebeelement eingreift. Dieses Abtriebselement ist fest mit mit einer als Abtriebswelle wirkenden Hohlwelle verbunden. Diese Hohlwelle ist an zwei Abschnitten über Wälzlager in dem Gehäuse gelagert, wobei die Wälzlager zwischen dem äußeren Radius der Hohlwelle und dem Gehäuse angeordnet sind.

Der Erfindung liegt das Problem zugrunde, einen Antrieb für Verstellvorrichtungen in Kraftfahrzeugen bereitzustellen, der einen geringen Bauraum benötigt, einfach zu montieren ist und einen kompakten, mit wenigen Bauteilen zu realisierenden Aufbau zuläßt.

Diese Aufgabe wird durch einen Antrieb mit den Merkmalen des Anspruchs 1 und des Anspruches 3 gelöst.

Durch die Ausbildung einer Lagereinrichtung unmittelbar an wenigstens einem der Gehäuseteile bzw. Gehäusehälften eines teilbaren (mehrteiligen) Gehäuses und die Lagerung des Abtriebselementes an einem solchen, von den Gehäusehälften gebildeten Lagerbereich erübrigt sich die Abstützung des Abtriebselementes auf der Motorabtriebswelle, wodurch diese kürzer baut. Weiterhin entfallen die notwendigen Teile zur Lagerung auf der Welle, da das Lager des Abtriebselementes, vorzugsweise eine Gleitlagerung, durch den Zusammenbau der Gehäuseteile entsteht. Es ist vorgesehen, die Gleitlagerbereiche entweder zu beschichten oder entsprechende Werkstoffe vorzusehen, um eine optimale Gleitreibung zu erreichen.

Die Lagereinrichtung ist dabei vorteilhafterweise so gestaltet, daß sowohl axiale als auch radiale Kräfte aufgenommen werden und daß diese auf möglichst direktem Weg in das Gehäuse abgeleitet werden. Zu diesem Zweck kann die Lagereinrichtung in Ringform gestaltet sein, wobei der äußere Umfang der ringförmigen Lagereinrichtung dem inneren Umfang des als Hohlrad ausgebildeten Abtriebselementes entspricht, so daß das Hohlrad lediglich auf die ringförmige Lagereinrichtung aufgelegt werden muß, um eine entsprechende Lagerung des Abtriebselementes zu erreichen. Eine solche Lagerung kann durch ein in das Abtriebselement hineinragendes Führungselement realisiert werden, wobei das Führungselement aus einem von dem Gehäuse in Richtung Abtriebselement hervorstehenden Ring oder Ringabschnitten bestehen kann. Ebenfalls ist möglich, daß einzelne, entsprechend dem inneren Umfang des Hohlrades des Abtriebselementes angeordnete Führungselemente, beispielsweise in Gestalt von Zylinderstiften oder entsprechend geformten Erhebungen die Lagerung bilden.

Alternativ zu der Lagerung, bei der Führungselemente in das Antriebselement hineinragen, ist es vorgesehen, daß in dem Gehäuseteil bzw. der Gehäusehälfte eine Nut eingearbeitet ist, in die eine entsprechende Ausformung des Abtriebselementes eingreift, ähnlich einem Kulissenstein in einer Kulissenführung.

Um den Integrationsgrad zu erhöhen und Montagekosten zu reduzieren ist es vorgesehen, daß die Lagereinrichtung an einem Teil des Gehäuses angeformt ist. Die Führungselemente bzw. das Führungselement sind bereits an dem Gehäuse angeformt oder die Nut ist im Rahmen des Urformens in dem Gehäuse vorgesehen. Alternativ ist es jedoch möglich, die Nut durch nachträglich aufgebrachte und an dem Gehäuse befestigte Elemente herzustellen, ebenso wie das Führungselement nachträglich, beispielsweise durch Kleben, Schrauben, Schweißen oder dergleichen angebracht werden kann.

Aus fertigungstechnischen Gründen ist es vorteilhaft, wenn die Lagerung des Abtriebselementes an dem Gehäuseteil als eine Gleitlagerung ausgebildet ist, da hierdurch Bauteile, Material und Montagekosten eingespart werden. Jedoch ist es grundsätzlich möglich, auch eine Nadel-, Kugel- oder Rollenlagerung vorzusehen.

Zur Erreichung eines kompakten und einfach zu handhabbaren Antriebs ist es vorgesehen, daß das Getriebe und der Motor innerhalb des Gehäuses angeordnet sind. Vorteilhafterweise ist ein Trägermodul oder Türinnenblech als ein Teil des Gehäuses ausgebildet, so daß einerseits die Stabilität des gesamten Antriebes erhöht wird, da auf diese Weise der Antrieb integraler Bestandteil des Trägermoduls wird, wodurch sich aufwendige Befestigungseinrichtungen erübrigen und andererseits die Herstellungs- und Montagekosten reduziert werden, da insgesamt weniger Bauteile benötigt werden.

Eine weitere Möglichkeit der funktionalen Integration besteht darin, daß ein Trägermodul oder Türinnenblech Bestandteil des magnetischen Rückflusses ist, wodurch ein separates Bauteil für den magnetischen Rückschluß des Motors entfällt. Eine geeignete Ausbildung kann beispielsweise dadurch bewirkt werden, daß das Trägermodul oder das Türinnenblech, zumindest in dem dafür vorgesehenen Bereich, aus einem ferromagnetischen Material besteht oder mit einem solchen Material beschichtet ist.

In einer Weiterbildung der Erfindung weist zumindest eines der Gehäuseteile eine feststehende, als Hohlrad ausgebildete Innenverzahnung auf, wodurch die Variationsbreite der einsetzbaren Getriebe erhöht wird. Dabei können Getriebeelemente zur Kraftübertragung auf das Abtriebselement sowohl mit der Innenverzahnung des Abtriebselementes als auch mit zumindest einer der Innenverzahnungen der Gehäuseteile kämmen. Bei zwei feststehenden Innenverzahnung ergibt sich der Vorteil, daß die auftretenden Kippmomente gleichmäßig aufgenommen werden. Allerdings müssen die Zähne der feststehenden Innenverzahnungen zueinander fluchtend ausgerichtet werden, wenn die kraftübertragenden Getriebeelemente in beide Verzahnungen eingreifen. Zwar ist auch das Abtriebselement mit seiner Ausbildung als innenverzahntes Hohlrad ein Element des Getriebes, aus Gründen der Übersichtlichkeit wird das Abtriebselement jedoch gesondert aufgeführt.

Alternativ zu einer an den Gehäuseteilen angeformten Innenverzahnung kann die Innenverzahnung auch durch ein oder zwei separate Zahnkränze, die als Hohlräder gefertigt wurden, ausgebildet werden, wobei die Zahnkränze bzw. der Zahnkranz drehfest in die Gehäuseteile eingelegt werden oder entsprechend befestigt sind.

Die als Zahnräder ausgebildeten Getriebeelemente kämmen dabei sowohl mit der Innenverzahnung des Abtriebselementes als auch mit der feststehenden Innenverzahnung, die entweder in den Gehäuseteilen allein oder in Zusammenwirken mit einem separaten Zahnkranz gebildet wird. Dazu ist es selbstverständlich erforderlich, daß der Teilkreisdurchmesser der Innenverzahnung des Abtriebselementes im wesentlich mit dem Teilkreisdurchmesser der feststehenden Innenverzahnung übereinstimmt. Die Zähnezahl der Innenverzahnung des Abtriebselementes unterscheidet sich um zumindest einen Zahn von der Zähnezahl der feststehenden Innenverzahnung, so daß bei einem Ablaufen der Getriebeelemente auf der feststehenden Innenverzahnung bei gleichzeitigem Eingriff in die Innenverzahnung des Abtriebselementes das Abtriebselement bei einem vollständigen Umlauf der Getriebeelemente um die Differenz der Zähnezahl weitergeschoben wird. Auf diese Weise wird eine sehr hohe Übersetzung erreicht und gleichzeitig mit wenigen Bauteilen ein sehr kompaktes Getriebe zur Verfügung gestellt.

Zur Reduzierung des Gesamtgewichtes des Getriebes kann das als Hohlrad ausgebildete Abtriebselement ringförmig ausgebildet sein und weist auf der Innenseite des Ringes, vorteilhafter Weise über die gesamte axiale Breite der Innenseite des Ringes, die Innenverzahnung auf. Die Außenseite des ringförmigen Hohlrades ist dabei zweckmäßigerweise als Seiltrommel oder als Zahnrad ausgebildet. Die Lagerung des ringförmigen Hohlrades, das vorteilhafterweise einen T-förmigen Querschnitt aufweist, wird von einer Nut gebildet, die bei dem Zusammenfügen des zweiteiligen Gehäuses entsteht. Durch diese Art der Lagerung wird Material des Abtriebselementes eingespart und Raum für die Anordnung der Getriebeelemente innerhalb des Hohlrades geschaffen. Weiterhin wird die Fertigung des Abtriebselementes erleichtert und die axiale Bautiefe reduziert.

Durch die Ausbildung des Abtriebselementes als Seiltrommel bzw. mit einer Außenverzahnung ist es möglich, das Getriebe vielfältig einzusetzen. Neben der speziellen Anwendung als Antrieb für einen Seilfensterheber ist es möglich, dieses kompakte Getriebe auch für Armfensterheber einzusetzen oder an anderen Stellen, z.B. für die Sitzverstellung, wo nur ein geringer Bauraum zur Verfügung steht.

Es ist vorgesehen, das Zahnradgetriebe aufgrund der erreichbaren hohen Übersetzungsverhältnisse in Kombination mit einem Umlaufrädergetriebe auszubilden, wobei hier insbesondere ein Wolfrom- oder Planetengetriebe vorteilhaft ist.

Alternativ dazu kann das Zahnradgetriebe auch in Kombination mit einem Taumelgetriebe ausgebildet sein, wobei zur Vermeidung von Kippmomenten der Lagerung und zum Massenausgleich das Taumelgetriebe zwei um 180° versetzt angeordnete Taumelräder aufweist. Alternativ zu einem Taumelgetriebe kann ein Harmonic-drive-Getriebe eingesetzt werden.

In einer vorteilhaften Ausgestaltung der Erfindung ist die axiale Ausdehnung der Getriebeelemente kleiner oder gleich der maximalen axialen Ausdehnung des Abtriebselementes, was zur Folge hat, daß die Abmessungen des Zahnradgetriebes im wesentlichen durch die axiale und radiale Abmessung des Abtriebselementes festgelegt ist. Die maximale axiale Ausdehnung wird dabei in der Regel durch die Breite der Seiltrommel bzw. der Außenverzahnung bestimmt. Weiterhin wird durch die Anordnung der Getriebeelemente innerhalb des Abtriebselementes, ohne Überstand über das Abtriebselement, ein zusätzlicher Schutz der Getriebeelemente erreicht. Zudem kann das entsprechende Getriebegehäuse sehr klein gehalten werden und eine einfache geometrische Form aufweisen, da keine Vorsprünge bzw. Absätze zu berücksichtigen sind.

Durch die Anordnung sämtlicher Getriebeelemente innerhalb des Radiusses der Innenverzahnung des Hohlrades wird die maximale radiale Ausdehnung durch den Außendurchmesser des Abtriebselementes bestimmt, was zu einem kompakten Aufbau der gesamten Getriebeeinheit des Abtriebselementes führt.

In einer Ausgestaltung der Erfindung sind die Verzahnungsbereiche der Getriebeelemente bzw. des Abtriebselementes mit einer Kunststoffbeschichtung versehen, um ein niedriges Geräuschniveau zu erreichen und einen sanften Ablauf der Zahnräder aufeinander zu gewährleisten. Eine Kunststoffbeschichtung der Verzahnungsbereiche hat zu dem den Vorteil, das Fertigungstoleranzen sehr gut ausgeglichen werden können.

Um insgesamt den Antrieb kompakt zu gestalten, ist der Motor vorteilhafter Weise als Flachmotor ausgebildet, wobei insbesondere Scheibenläufer- bzw. Flachankermotoren vorgesehen sind.

In einer vorteilhaften Ausgestaltung der Erfindung sind sämtliche Komponenten des Antriebes, also der Motor, das Getriebe, die Gehäuseteile und die Elektronikeinheit so gestaltet, daß bei der Montage lediglich in einer Richtung die Zuführbewegung erfolgt. So bildet beispielsweise ein Gehäuseteil das Basisteil, das auf einem Montagehalter befestigt wird, und sämtliche weiteren Bauteile wie Planetenträger mitsamt Planetenrädern, Taumelräder, Achsen, Ankerscheibe und das zweite Gehäuseteil werden aus einer Richtung, vorzugsweise von oben, zugeführt. Durch diesen Aufbau wird insbesondere die automatisierte Montage des Antriebes erleichtert und beschleunigt.

Die Mittel zur Bestromung des Motors sind in der Elektronikeinheit vorgesehen, die durch Öffnungen in dem Gehäuse mit dem Motor verbindbar sind. Damit wird ein überwiegend geschlossenes Gehäuse erhalten und die externen Anschlüsse an die Stromversorgung des Fahrzeuges werden über die Elektronikeinheit realisiert.

Ebenso sind Sensorelemente in der Elektronikeinheit vorgesehen sind, die durch Öffnungen in dem Gehäuse mit dem Motor oder dem Getriebe gekoppelt sind und der Elektronikeinheit Informationen über die Drehzahl, die Position oder die Leistungsaufnahme des Motor übermitteln. Grundsätzlich ist es auch möglich, die Sensoren, z.B. optische Sensoren, auf das Getriebe auszurichten, um von dort die Informationen zu erhalten.

Anhand von in der Zeichnung dargestellten Ausführungsbeispielen soll der der Erfindung zugrundeliegende Gedanke näher erläutert werden. Es zeigen:
- Figur 1a -: einen Antrieb mit Planetengetriebe in Explosionsdarstellung
- Figur 1b -: ein montiertes Getriebe nach Figur 1a;
- Figur 2 -: eine Schemazeichnung eines Seilfensterhebers;
- Figur 3 -: einen montierten Antrieb;
- Figur 4 -: eine Schnittdarstellung eines Wolfromgetriebes;
- Figuren 4a und 4b -: Detailansichten der Lagerung eines Abtriebselementes;
- Figur 5a -: eine Schnittdarstellung eines Taumelgetriebes;
- Figur 5b -: eine Draufsicht auf das Taumelgetriebe gemäß Figur 5a; sowie
- Figur 6 -: eine Explosionsdarstellung eines Antriebes in Verbindung mit einem Türinnenblech einer Kraftfahrzeugtür als Basisteil.

Übereinstimmende Bauteile sind in den Figuren jeweils mit gleichen Bezugsziffern versehen.

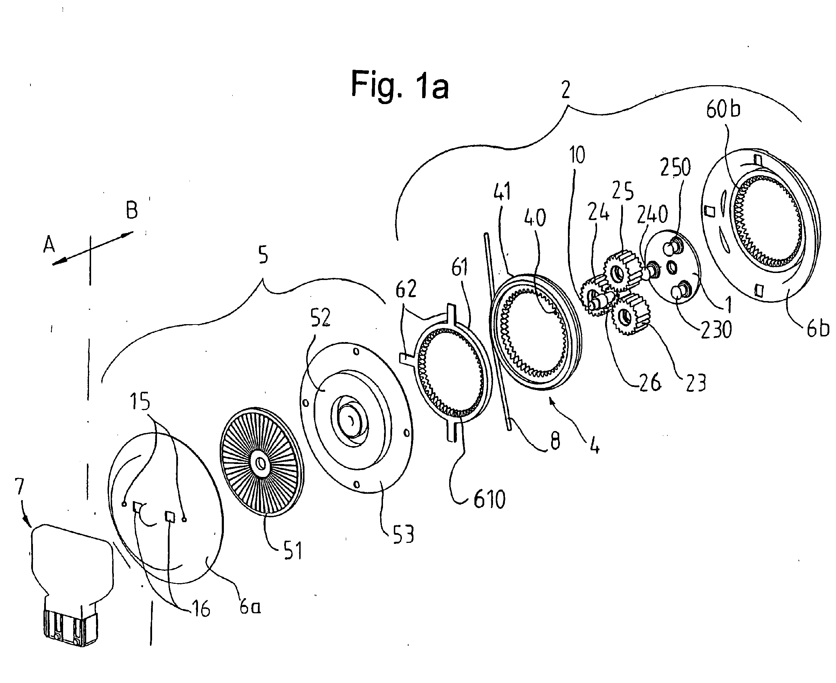

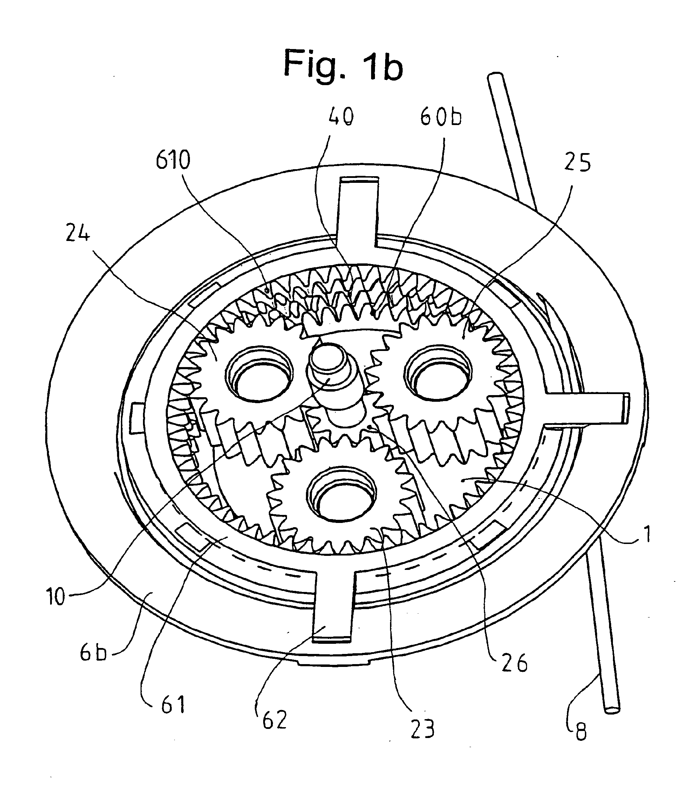

In der Figur 1 ist ein Antrieb 100 in der Version eines Seilfensterheberantriebes in Explosionsdarstellung dargestellt, mit einer Elektronikeinheit 7, die einen Motor 5 steuert, der vorzugsweise als Flachmotor ausgebildet und mit einem Getriebe 2 gekoppelt ist. Der Motor 5 und das Getriebe 2 sind von zwei Gehäuseteilen 6a und 6b umschlossen, das Öffnungen zum Ein- und Austritt eines Fensterheberseiles 8 aufweist, so daß sich der Motor 5 und das Getriebe 6 innerhalb eines Gehäuses befinden. Nachfolgend wird aufgrund der zweiteiligen Ausgestaltung des Gehäuses aus Gründen der Anschaulichkeit von Gehäusehälften gesprochen. Bei einer vielteiligen Variante des Gehäuses ist der Begriff Gehäuseteil zu verwenden.

In der Elektronikeinheit 7 sind unter anderem die nicht dargestellten Bürsten sowie Sensoren, z.B. für die Drehzahl oder die Stellung des Motors, untergebracht. Dabei ist vorgesehen, daß die Elektronikeinheit 7 auf der Trockenraumseite A angebracht ist, während der Motor 5 und das Getriebe 2 sich auf der Naßraumseite B befinden.

In dem Trockenraum A, der beispielsweise durch ein nicht dargestelltes Trägermodul von dem Naßraum B getrennt ist, ist die Elektronikeinheit 7 mit den notwendigen Anschlüssen für die Spannungsversorgung, den Bürsten sowie Sensoreinrichtungen für die Position und Drehzahl des Motors 5 dargestellt. Auf der Naßraumseite B finden sich die übrigen Komponenten des Antriebes 100, nämlich der Motor 5 mitsamt Getriebe 2 und den Gehäusehälften 6a und 6b.

In der Gehäusehälfte 6a befinden sich, neben Öffnungen 15 für Sensoren, die Öffnungen 16 für die Bürsten, die von den korrespondierenden Elementen in der Elektronikeinheit 7 durchgriffen werden. Auf der der Elektronikeinheit 7 abgewandten Seite der Gehäusehälfte 6a ist die Ankerscheibe 51 angeordnet, die zwischen der Gehäusehälfte 6a und einem Gehäusedeckel 53 als magnetischer Rückschluß mit einem Magneten 52 eingebettet ist. Die Gehäusehälfte 6a, die Ankerscheibe 51 sowie der Gehäusedeckel 53 mitsamt dem Magneten 52 bilden den Motor 5, der von der Elektronikeinheit 7 mitsamt den Bürsten komplettiert wird. Eine Motorabtriebswelle 10 ist an der drehbaren Ankerscheibe 51 befestigt und bewirkt die Übertragung der Drehbewegung auf das Getriebe 2, wobei aus Gründen der Übersichtlichkeit die Motorabtriebswelle 10 im Zusammenhang mit dem Getriebe 2 dargestellt ist.

Die Motorabtriebswelle 10 trägt ein drehfest auf ihr montiertes Sonnenrad 25, das drei Planetenräder 23-25 kämmt, die auf einem Planetenträger 1 mit Drehachsen 230-250 drehbar gelagert sind. Der Planetenträger 1 selbst ist drehbar auf der Motorabtriebswelle 10 gelagert.

Die Planetenräder 23-25 kämmen dabei sowohl die Innenverzahnung 60b der Gehäusehälfte 6b als auch die Innenverzahnung 610 eines feststehenden Zahnkranzes 61 und laufen aufgrund der drehbaren Lagerung des Planetenträgers 1 auf den feststehenden Innenverzahnungen 60b und 610 um. Ebenfalls kämmen die Planetenräder 23-25 eine Innenverzahnung 40 eines ringförmig ausgebildeten Abtriebselementes 4, das zwischen dem feststehenden Zahnkranz 61 und der Gehäusehälfte 6b angeordnet ist.

Um das Abtriebselement 4 ist das Fensterheberseil 8 geschlungen, wobei das Seil 8 in Vertiefungen 41 auf dem äußeren Umfang des Abtriebselementes 4 geführt ist, womit das Abtriebselement 4 als Seiltrommel ausgebildet ist. Die Seiltrommel ist somit Bestandteil des Getriebes 2.

Im Gegensatz zu dem feststehenden Zahnkranz 61, der über angeformte Laschen 62 an der feststehenden Gehäusehälfte 6b festgelegt ist, ist das Abtriebselement 4 drehbeweglich gelagert. Alternativ zu einem separaten, nachträglich in eine Gehäusehälfte einzulegenden Zahnkranz 61 kann die feststehende Innenverzahnung auch an einem Motorgehäusedekkel 53 angespritzt werden, wobei in den Motorgehäusedeckel 53 ein Magnet 52 für den Rückschluß integriert sein kann.

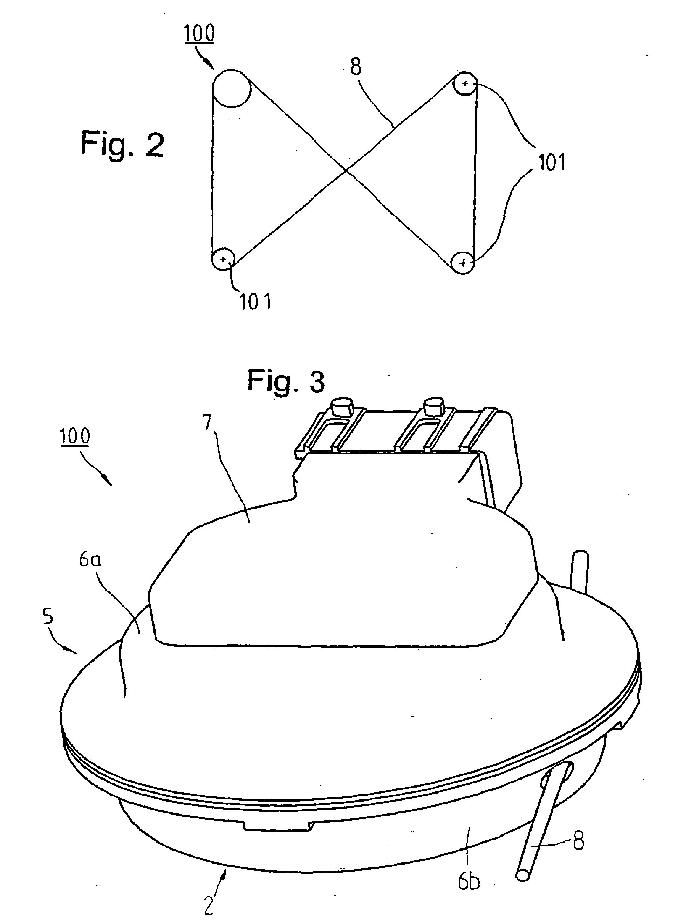

Figur 2 zeigt in einer Schemazeichnung den Antrieb 100 und drei Seilumlenkrollen 101, wobei der Antrieb 100 in dem Ausführungsbeispiel gleichzeitig die Funktion der vierten Seilumlenkung wahrnimmt. Die Funktionsweise des Seilfensterhebers an sich ist bekannt und bedarf keiner Erläuterung. Neben dem Fensterheberantrieb ist aufgrund der kompakten Bauweise die Anwendung für sämtliche Verstelleinrichtungen in Kraftfahrzeugen vorgesehen, z.B. in Schiebedächern oder bei der Verstellung von Sitzkomponenten oder Sitzen.

In der Figur 3 ist der Antrieb 100 in montiertem Zustand gezeigt.

Die Art und Weise, wie das Abtriebselement 4 in Drehbewegung versetzt wird, wird nachfolgend anhand der Figur 1b erläutert, in der ein zusammengebautes Getriebe 2 gemäß der Figur 1a gezeigt ist. Auf der Motorabtriebsachse 10 ist das Sonnenrad 26 drehfest montiert und kämmt die auf nicht dargestellten Drehachsen auf dem Planetenträger 1 gelagerten Planetenräder 23-25. Die Planetenräder 23-25 greifen in die Innenverzahnungen 60b und 610 der Gehäusehälfte 6b sowie des feststehenden Zahnkranzes 61 ein. Das Festlegen des Zahnkranzes 61 erfolgt vorzugsweise mit den Laschen 62 an der Gehäusehälfte 6b, in der entsprechende Ausnehmungen vorgesehen sind. Alternativ oder in Ergänzung dazu können die entsprechenden Ausnehmungen auch in dem Motorgehäusedekkel 53 eingearbeitet sein. Die Innenverzahnungen 610 und 60b weisen den gleichen Teilkreisdurchmesser sowie die gleiche Zähnezahl auf und die Laschen 62 sowie die korrespondierenden Ausnehmungen in der Gehäusehälfte 6b sind dergestalt ausgerichtet, daß die Zähne der Innenverzahnungen 610 und 60b zueinander fluchten. Beim Drehen des Sonnenrades 26 kämmen somit die Planetenräder 23-25 die Innenverzahnungen 610 und 60b und laufen um die Motorabtriebswelle 10 innerhalb der Innenverzahnungen 610 und 60b um.

Die Innenverzahnungen 610 und 60b der Gehäusehälfte 6b bzw. des Zahnkranzes 61 sind axial zueinander beabstandet, so daß ein Freiraum bzw. ein Spalt zwischen den Innenverzahnungen 610 und 60b entsteht, in den das Abtriebselement 4, drehbar lagert. Die Innenverzahnung 40 entspricht im Teilkreisdurchmesser im wesentlichen der Innenverzahnung 610 bzw. 60b, weist jedoch eine dazu verschiedene Zähnezahl auf, die um zumindest einen Zahn geringer als die der Innenverzahnung 610 bzw. 60b ist.

Durch das Umlaufen der Planetenräder 23-25 auf den feststehenden Innenverzahnungen 610 und 60b und dem gleichzeitigen Kämmen der Innenverzahnung 40 des Abtriebselementes wird aufgrund der verschiedenen Zähnezahl das Abtriebselement 4 in Richtung des Umlaufes der Planetenräder weitergeschoben und somit in Drehung versetzt. Das Fensterheberseil 8, das auf der als Seiltrommel ausgebildeten Außenseite des Abtriebselementes 4 aufgewickelt ist, wird je nach Drehrichtung der Motorabtriebswelle 10 in die eine oder andere Richtung bewegt.

Sämtliche Getriebeelemente, also die Motorwelle 10, das Sonnenrad 26, die Planetenräder 23-25 befinden sich innerhalb des Radiusses der Innenverzahnung 40 des Antriebselementes 4 und ermöglichen aufgrund dieser Anordnung eine sehr kompakte Bauweise.

Es ist selbstverständlich möglich, den Planetenträger feststehend auszubilden und somit ein konventionelles Planetengetriebe vorzusehen. Bei einer solchen Ausgestaltung sind die feststehenden Innenverzahnungen der Gehäusehälften nicht vorgesehen.

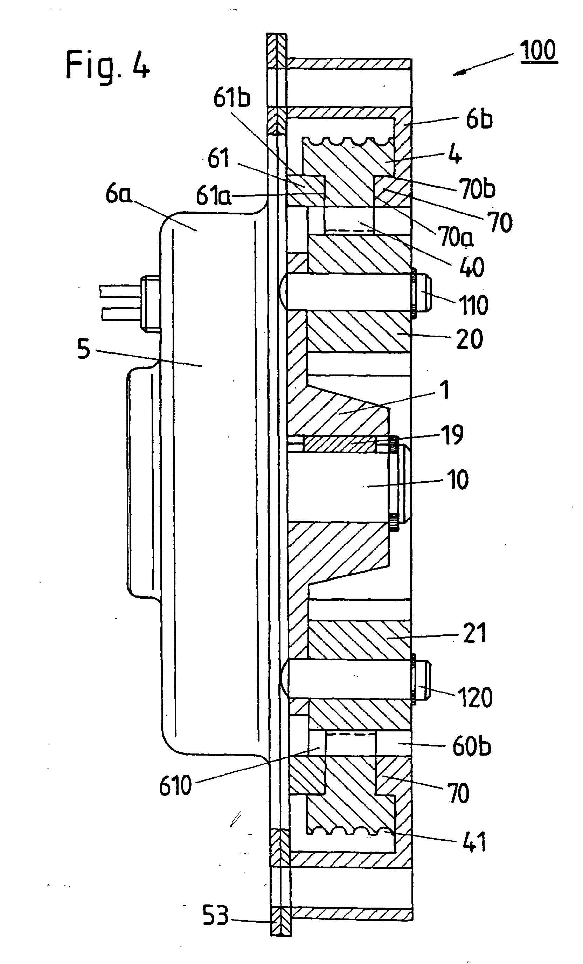

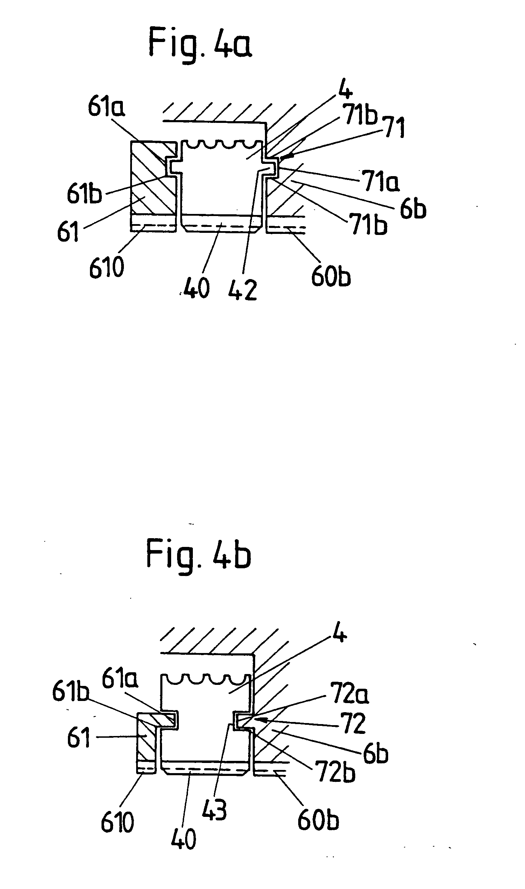

Die Fig. 4 zeigt den Antrieb 100 mit dem Motor 5 und einem mit der Motorabtriebswelle 10 gekoppelten Umlaufrädergetriebe in Schnittdarstellung. Das Umlaufrädergetriebe, hier als Wolfromgetriebe ausgebildet, besteht aus einem Planetenträger 1, der drehfest der Motorabtriebswelle 10 über eine Paßfeder 19 verbunden ist und auf dem drehbar die Planetenräder 20 und 21 angeordnet sind. Die Planetenräder 20 und 21 sind auf den um die Motorabtriebswelle 10 umlaufenden Drehachsen 110 und 120 gelagert und kämmen sowohl mit den Innenverzahnungen 60b der feststehenden Gehäusehälfte 6b, der Innenverzahnung 610 des feststehenden Zahnkranzes 61 als auch mit der Innenverzahnung 40 des als Hohlrad ausgebildeten Abtriebselementes 4.

Das Gehäuse, in dem das Abtriebselement 4 drehbar gelagert ist, besteht aus zwei Gehäusehälften 6a und 6b, die durch nicht dargestellte Verbindungsmittel miteinander verbunden sind. Die beiden Gehäusehälften 6a und 6b bilden zusammen mit dem Zahnkranz 61 im montierten Zustand eine Nut, durch die der schmalere Abschnitt des im Querschnitt T-förmigen Abtriebselementes 4 hindurchgeht.

Um das Abtriebselement 4 ohne die Anordnung einer aufwendigen Abstützung auf der Motorabtriebswelle 10 lagern zu können, ist an der Gehäusehälfte 6b eine Lagereinrichtung 70 einstückig ausgebildet. Die Lagereinrichtung besteht aus einem umlaufenden Ring, dessen äußerer Radius dem Radius der Unterseite des parallel zur Drehachse verlaufenden Schenkels des Abtriebselementes 4 entspricht. Der Schenkel weist einen größeren Radius als die Innenverzahnung 40 des Abtriebselementes 4 auf, so daß an der Gehäusehälfte 6b einerseits die feststehende Innenverzahung 60b ausgebildet und andererseits sich senkrecht zu der Innenverzahung eine Lagerfläche 70a zur Aufnahme axialer Kräfte und eine parallel zur Innenverzahnung 60b ausgebildete Lagerfläche 70b zur Aufnahme radialer Kräfte ausgebildet sind. Die Lagereinrichtung 70 ist vorzugsweise in einem Bereich zwischen der Innenverzahung 40 und dem äußeren Radius des Abtriebselementes 4, also den Vertiefungen 41 für die Seilaufnahme, an der Gehäusehälfte 6b angeordnet, um möglichst geringe Kippmomente des Abtriebselementes 4 entstehen zu lassen. Auf der der Gehäusehälfte 6b gegenüberliegenden Seite des Abtriebselementes 4 ist im montierten Zustand entsprechend der angeformten Lagereinrichtung 70 der drehfest angeordnete Zahnkranz 61 positioniert, der die gleiche Funktion wie die Lagereinrichtung 70 übernimmt und eine symmetrische Lagerung des Abtriebselementes gewährleistet. Der Zahnkranz 61 weist ebenfalls zwei Lagerflächen 61a und 61b, die axiale und radiale Kräfte aufnehmen und auf die Gehäusehälfte 6a übertragen.

Die Figuren 4a und 4b zeigen weitere Varianten der Lagereinrichtung 70, wobei nur der relevante Ausschnitt des Antriebs dargestellt ist. In der Figur 4a ist an der Gehäusehälfte 6b eine Lagereinrichtung 70 in Gestalt einer umlaufenden, ringförmigen Nut 71 eingearbeitet. Die Nut 71 kann entweder eingeformt sein oder nachträglich herausgefräst, -gedreht oder -geschliffen werden. In diese Nut 71 greift eine Ausformung 42 des Abtriebselementes 4 ein. Die Ausformung 42 kann aus einem Ring bestehen, der in die Nut 71 eingelegt werden kann und in der Nut 71 umläuft. Neben der ringförmigen Ausgestaltung können Ringsegmente oder einzelne Stifte aus der Seitenwandung des Abtriebselementes 4 hervorragen, um in die Nut 71 einzugreifen und das Abtriebselement 4 sowohl axial als auch radial zu lagern. Die Ausformung 42 kann einstückig an dem Abtriebselement 4 ausgebildet oder an diesem befestigt werden, beispielsweise durch Kleben, Schweißen oder Schrauben. Die axialen Kräfte werden dabei von der Grundfläche der Nut 71a und die radialen Kräfte von den Seitenflächen 71b aufgenommen.

Die Figur 4b zeigt eine Umkehrung des Prinzips der Figur 4a, bei der ein Führungselement 72 an der Gehäusehälfte 6b angeformt ist, das in eine Nut 43 in dem Abtriebselement 4 eingreift. Die Funktion entspricht dabei der in der Figur 4a beschriebenen, wobei in die umlaufende Nut 43 des Abtriebselementes 4 das Führungselement 72 wie ein Kulissenstein einer Kulissenführung eingreift und so für eine Führung und Lagerung des Abtriebselementes 4 sorgt. Axiale Kräfte werden durch die dem Abtriebselement zugewandte Stirnseite 72a und die radialen Kräfte durch die Seitenflächen 72b aufgenommen. Das Führungselement 72 kann ebenfalls umlaufend ringförmig oder aus einzelnen Elementen bestehen. Wie in der Figur 4, in der die Lagereinrichtung 70 bzw. die Stirnfläche 70a in das Abtriebselement 4 in axialer Richtung über die Seitenfläche des Abtriebselementes 4 hineinragt, wird durch diese Ausgestaltung die Bautiefe des Antriebes verringert, da die Lagerung in Richtung des zentrums des Abtriebselementes 4 verlagert wird. Dagegen können in der Ausgestaltung der Figuren 4a und 4b Radialkräfte in beiden Richtungen von der Nut 71 bzw. von dem Führungselement 72 aufgenommen werden, wodurch die Lagerung und die Anordnung des Lagereinrichtung flexibler gestaltet werden kann.

Durch die beschriebene Lagerung, bei der die Lagerstelle des Abtriebselementes 4 durch die Gehäusehälften bzw. durch eine Gehäusehälfte und ein mit der anderen Gehäusehälfte verbundenes Lagerelement wie der Zahnkranz 61, gebildet wird, werden die Kippmomente des Abtriebselementes 4 direkt auf die Gehäusehälften 6a und 6b übertragen. Aufgrund der entsprechend kleinen Hebel ist die Belastung zu einer herkömmlichen Lagerung auf einer zentralen Welle reduziert. Die Ausbildung als Gleitlager, wie sie oben beschrieben wurde, hat den Vorteil einer preiswerten Herstellung und eines wartungsarmen Betriebes.

Anhand der Figur 4 wird die Funktionsweise des Getriebes 6 beschrieben. An der nach innen gerichteten Stirnseite des Abtriebselementes 4 ist die Innenverzahnung 40 vorgesehen, deren Teilkreisdurchmesser im wesentlichen dem Teilkreisdurchmesser der Innenverzahnungen 60b und 610 der Gehäusehälfte 6b und des Zahnkranzes 61 entspricht und mit den Verzahnungsbereichen der Planetenräder 20, 21 kämmt. Dies bedeutet, daß die Verzahnungen der Planetenräder 20, 21 sowohl mit der Innenverzahnungen 60b und 610 als auch mit der Innenverzahnung 40 des Abtriebselementes 4 kämmen.

An dem äußeren Umfang des Abtriebselementes 4 sind Vertiefungen 41 für die Führung eines nicht dargestellten Seiles dargestellt, mit dem ein seilbetriebener Fensterheber betätigt werden kann. Nachfolgend wird die Wirkungsweise des Getriebes kurz erläutert.

Über die Motorabtriebswelle 10 des Motors 5 wird der Planetenträger 1, der über die Paßfeder 19 drehfest mit der Motorabtriebswelle 10 verbunden ist, in Drehung versetzt. Dadurch laufen die Drehachsen 110 und 120 der Planetenräder 20 und 21 um die Motorabtriebswelle 10 und lassen die Planetenräder 20 und 21 ebenfalls um die Motorabtriebswelle 10 umlaufen. Aufgrund der drehbaren Lagerung der Planetenräder 20 und 21 um die Drehachsen 110 und 120 und des Eingriffes der Verzahnungen der Planetenräder 20 und 21 in die drehfesten Innenverzahnungen 60b und 610, drehen die Planetenräder 20 und 21 zusätzlich um die Drehachsen 110 und 120.

Die Planetenräder 20 und 21 kämmen zudem die Innenverzahnung 40 des drehbar gelagerten Abtriebselementes 4, dessen Zähnezahl der Innenverzahnung 40 zu den Innenverzahnung 610 und 60b verschieden ist, so daß nach einer vollständigen Drehung des Planetenträgers 1 um 360° das Abtriebselement 4 um die Differenz der Zähnezahl verschoben wird. Auf diese Weise wird ein sehr hohes Übersetzungsverhältnis erreicht, was dazu führt, daß der Motor 5 relativ klein ausgelegt werden kann, eine hohe Drehzahl realisieren kann und dadurch eine geringere Ausgangsleistung aufzuweisen hat. Auch wird auf diese Weise mit nur einer Getriebestufe eine Übersetzung einer hohen Drehzahl des Motors 5 auf eine geringe Drehzahl des Abtriebselementes 4 erreicht.

Die dem Motor 5 abgewandte Gehäusehälfte 6b ist in dem dargestellten Beispiel mit einem Ausschnitt im Bereich der Planetenräder 20 und 21 dargestellt; denkbar ist jedoch auch, daß die Gehäusehälfte 6b eine überwiegend geschlossene Oberfläche aufweist und daß sämtliche Getriebeelemente, also die Drehachsen 110 und 120 sowie die Planetenräder 20 und 21, der Planetenträger 1 und die Motorabtriebswelle 10 von dem Gehäuse 6b überdeckt werden. Die feststehende, als Hohlrad ausgebildete Innenverzahnung 60b ist damit als ein Gehäuseteil ausgebildet, wodurch ein erhöhter Integrationsgrad erreicht wird. Auf diese Weise kann kostengünstig eine Trennung von Naß- und Trockenraum durchgeführt werden, ohne daß eine aufwendige Abdichtung des Durchtritts der Motorabtriebswelle 10, beispielsweise durch ein Trägermodul oder Türinnenblech, erfolgen muß. Lediglich die Verbindung der Gehäusehälften 6a und 6b und die Befestigung auf dem Trägermodul oder dem Türinnenblech, bedarf dann einer üblichen Abdichtung.

Selbstverständlich ist es möglich, den Bereich mit den Vertiefungen 41 breiter zu gestalten bzw. die Getriebeelemente 20 und 21 derart axial schmal auszubilden, daß die axiale Breite des Getriebes im wesentlichen durch die axiale Breite des Abtriebselementes 4 zzgl. der Wandung der Gehäusehälfte 6b festgelegt wird. Sämtliche Getriebeelemente befinden sich dann innerhalb des Radiusses der Innenverzahnung 40 des Abtriebselementes 4 und ragen weder radial noch axial aus dem Abtriebselement 4 hervor.

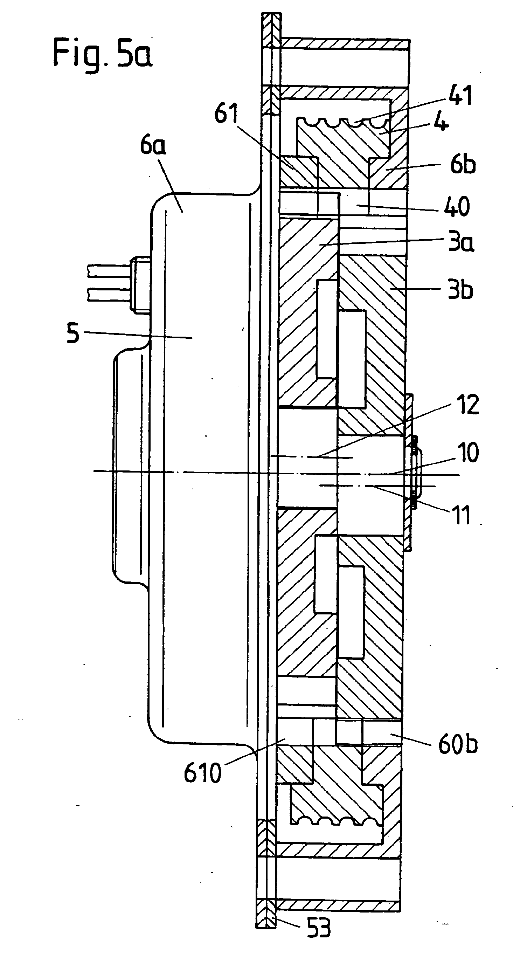

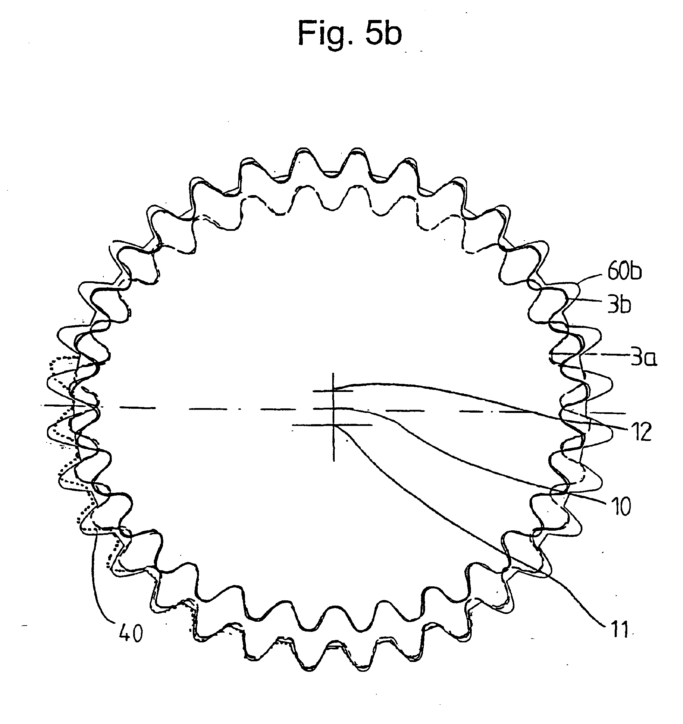

In den Fig. 5a und 5b ist eine Variante des erfindungsgemäßen Antriebes gezeigt, bei dem das Getriebe als ein Taumelgetriebe ausgebildet ist. Das Abtriebselement 4 ist dabei analog zu der Ausführung gem. der Figuren 1 und 4 drehbar in einem zweiteiligen feststehenden Gehäuse gelagert, wobei sowohl das Gehäuse 6b als auch das Abtriebselement 4 jeweils mit Innenverzahnungen 60b bzw. 40 versehen sind. Ebenfalls ist der Zahnkranz 61 mit der Innenverzahnung 610 entsprechend der Figur 4 drehfest angeordnet. Die Innenverzahnungen 40 und 60b, 610 werden gleichzeitig von zwei exzentrisch auf der Motorabtriebswelle 10 gelagerten Taumelrädern 3a und 3b gekämmt, wobei die Taumelräder 3a und 3b aus Gründen des Massenausgleiches um 180° versetzt angeordnet sind. Die Taumelräder 3a und 3b sind axial zueinander versetzt angeordnet und kämmen daher jeweils auf der Hälfte der Breite die Innenverzahnung 40 des Abtriebselementes 4.

Auf der Motorabtriebswelle 10 sind zwei Exzenter 11 und 12 angeordnet, die die gleiche Exzentrizität zu der Drehachse der Motorabtriebswelle 10 haben und um 180° versetzt sind. Auf diesen Exzentern 11 und 12 sind je ein Taumelrad 3b und 3a drehbar gelagert, wobei der Teilkreisdurchmesser der Taumelräder 3b und 3a so gewählt ist, daß die Verzahnungen der Taumelräder 3b und 3a mit den feststehenden Innenverzahnungen 60b und 610 und der Innenverzahnung 40 des Abtriebselementes 4 kämmen. Bei einer Drehung der Motorabtriebswelle 10 laufen die Exzenter 11 und 12 um die Drehachse der Motorabtriebswelle 10 um und die Taumelräder 3a und 3b rollen jeweils auf den feststehenden Innenverzahnungen 60b und 610 ab. Da die Verzahnungsbereiche der Taumelräder 3b und 3a gleichzeitig auch mit der Innenverzahnung 40 des Abtriebselementes 4 kämmen, kommt es aufgrund der unterschiedlichen Zähnezahl der Innenverzahnungen 40 und 60b, 610 zu einem Vorwärtsschieben des Abtriebselementes 4.

Dementsprechend wird das auf die Seiltrommel mit den Vertiefungen 41 gewickelte Fensterheberseil 8 entsprechend bewegt.

In der Fig. 5b ist eine schematische Draufsicht auf das Taumelgetriebe gem. der Fig. 5a gezeigt, anhand der zu erkennen ist, daß sowohl das Taumelrad 3a als auch das Taumelrad 3b innerhalb des Radiusses der Innenverzahnung 40 des Abtriebselementes und der feststehenden Innenverzahnung 60b ablaufen und wie die Exzenter 11 und 12 in Bezug auf die Drehachse der Motorabtriebswelle 10 angeordnet sind. Gestrichelt ist die Innenverzahnung 40 des Abtriebselementes 4 angedeutet, wobei am linken Rand der Zeichnung zu erkennen ist, daß die Innenverzahnungen 40 und 60b eine unterschiedliche Zähnezahl aufweisen und daß das Abtriebselement 4 aufgrund der Differenz der Zähnezahl und des Eingriffes der Taumelräder 3a und 3b in die drehfeste Innenverzahnung 60b gedreht wird.

Auch hier kann durch eine entsprechend axial schmale Auslegung der Getriebeelemente, insbesondere der Taumelräder 3a und 3b, ein sehr schmaler Aufbau erzielt werden. Ebenfalls entspricht die axiale Breite des Getriebes im wesentlichen der Breite des Abtriebselementes 4.

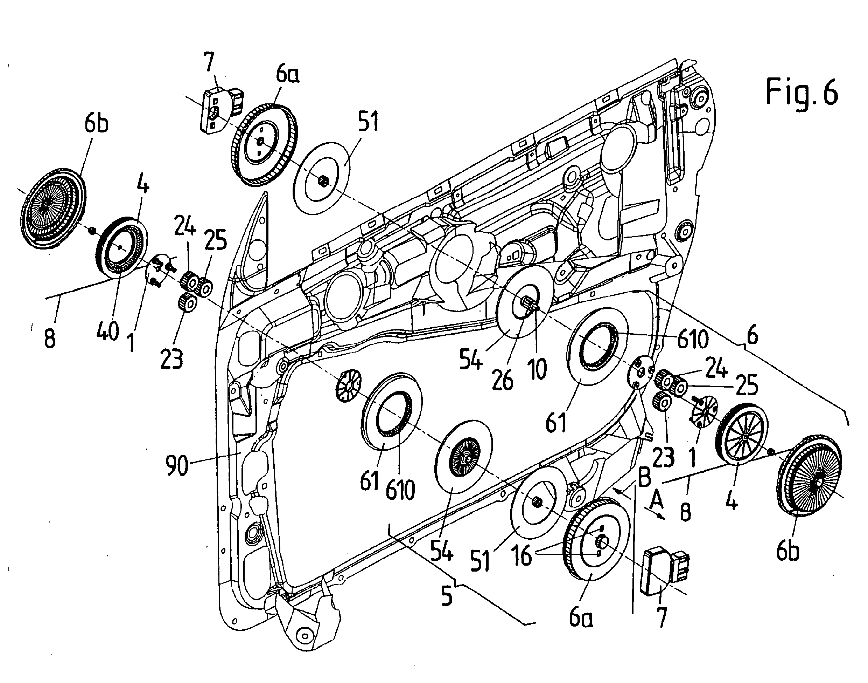

In der Figur 6 ist eine Explosionsdarstellung des Antriebes für einen Seilfensterheber mit einem Scheibenläufermotor 5, einem Planetengetriebe 2 mit Planetenrädern 23, 24 und 25 und einer den Motor 5 ansteuernden Elektronikeinheit 7 aus zwei entgegengesetzten Ansichten in Bezug zu einem Türinnenblech 90 einer Fahrzeugtür als Basisteil dargestellt.

Der Motor 5 und das Getriebe 2 sind von zwei Gehäusehälften 6a und 6b mit Öffnungen zum Eintritt und Austritt eines Fensterheberseiles 8 umschlossen. In der Elektronikeinheit 7 sind nicht dargestellte Bürsten und Sensoren, beispielsweise für die Erfassung der Drehzahl oder der Stellung des Motors 5, untergebracht, wobei vorgesehen ist, daß die Elektronikeinheit 7 auf der Trockenraumseite A angeordnet ist, während sich der Motor 5 und das Getriebe 2 auf der Naßraumseite B der Fahrzeugtür bzw. des Türinnenbleches 90 befinden. In dem Trockenraum A, der beispielsweise durch ein Trägermodul von dem Naßraum B getrennt ist, sind die Büsten, Sensoren und Anschlüsse für die Spannungsversorgung angeordnet, während sich auf der Naßraumseite B die übrigen Komponenten des Antriebes, nämlich der Motor 5 und das Getriebe 2 mit der Gehäusehälften 6a und 6b, befinden.

Die motorseitige Gehäusehälfte 6a weist Öffnungen 16 für die Bürsten und dergleichen auf, die von entsprechenden Elementen durchgriffen werden. Auf der der Elektronikeinheit 7 abgewandten Seite der motorseitigen Gehäusehälfte 6a ist eine magnetische Rückschlußscheibe 51, eine Läuferscheibe 54 und ein als Magnetscheibe ausgebildeter Zahnkranz 61 angeordnet. Die motorseitige Gehäusehälfte 6a, die Läuferscheibe 54, die magnetische Rückschlußscheibe 51 und die drehfeste Magnetscheibe 61 mit integriertem Rückschluß und integrierter Innenverzahnung 610 bilden den Scheibenläufermotor 5, der von der Elektronikeinheit 7 komplettiert wird. Die Antriebswelle 10 ist an der Läuferscheibe 54 befestigt und bewirkt die Übertragung der Drehbewegung auf das Planetengetriebe 2.

Auf der Antriebswelle 10 ist ein drehfest montiertes oder angeformtes Sonnenrad 26 angeordnet, das die drei Planetenräder 23, 24, 25 kämmt, die drehbar auf dem Planetenträger 1 gelagert sind. Der Planetenträger 1 ist dabei drehbar auf der Antriebswelle 10 gelagert. Die Planetenräder 23, 24, 25 stehen sowohl mit der Innenverzahnung 40 des Abtriebselementes 4 als auch mit der Innenverzahnung 610 des drehfesten, als Magnetscheibe wirkenden Zahnkranzes 61 in Eingriff und laufen aufgrund der drehbaren Lagerung des Planetenträgers 1 in den Innenverzahnungen 40 und 610 um. Das dadurch angetriebene Abtriebselement 4 bewegt daraufhin das um den Umfang geschlungene Fensterheberseil 8 in die entsprechende Richtung.

In diesem Ausführungsbeispiel bildet das Türinnenblech 90 das Basisteil, an dem der Antrieb befestigt ist. Dieses Basisteil, das alternativ von einem Trägermodul oder einer Trägerplatte gebildet sein kann, kann als Träger- oder Stabilisierungselement in die Konstruktion des Antriebes einbezogen werden, beispielsweise, indem das Basisteil einen Bestandteil des Getriebegehäuses bildet. Durch ein entsprechendes Herstellungsverfahren kann das Basisteil beispielsweise als motorseitige Gehäusehälfte ausgeformt werden, so daß die übrigen Bestandteil des Motors 5 und des Getriebes 6 nur noch aufgesetzt und befestigt werden müssen. Im vorliegenden Beispiel würde eine solche Montage der Motor- und Getriebebauteile von der Naßraumseite erfolgen. Das Basisteil, beispielsweise ein Trägermodul, könnte somit komplett vorgefertigt werden und im Rahmen der Endmontage müßte lediglich die Elektronikeinheit 7 von der Trockenraumseite aufgesteckt werden.

Weiterhin ist es vorgesehen, daß das Basisteil als ein Bestandteil des magnetischen Rückschlusses ausgebildet ist, wodurch Bauteile und Montagekosten reduziert werden können.

Zur Vermeidung unnötiger Geräusche sowie zum einfachen Ausgleich von Toleranzen ist vorgesehen, sämtliche Verzahnungsbereiche mit einer Kunststoffschicht zu überziehen, wodurch ein weiches Abrollverhalten bei einem niedrigen Geräuschniveau erreicht wird.

## Patentansprüche

1. Antrieb für Verstellvorrichtungen in Kraftfahrzeugen, insbesondere für einen Fensterheber, mit einem Motor (5) und einem mit dem Motor (5) gekoppelten Zahnradgetriebe (2), das in einem mindestens zweiteiligen Gehäuse (6a, 6b) angeordnet ist und ein innenverzahntes Hohlrad (4) als Abtriebselement aufweist, wobei an zumindest einem Gehäuseteil (6a; 6b) eine Lagereinrichtung (70, 71, 72) ausgebildet ist, auf der das Abtriebselement (4) gelagert ist.
**dadurch gekennzeichnet,**
**daß** die Lagereinrichtung (70, 71, 72) in einem Bereich zwischen der Innenverzahnung (40) und dem äußeren Radius des Abtriebselementes (4) an dem Gehäuseteil (6a, 6b) angeordnet ist.

2. Antrieb nach Anspruch 1, **dadurch gekennzeichnet, daß** die Lagereinrichtung (70) als eine ringförmige Nut (71) oder als ein in das Abtriebselement (4) hineinragendes Führungselement (72) ausgebildet ist.

3. Antrieb für Verstellvorrichtungen in Kraftfahrzeugen, insbesondere für einen Fensterheber, mit einem Motor (5) und einem mit dem Motor (5) gekoppelten Zahnradgetriebe (2), das in einem mindestens zweiteiligen Gehäuse (6a, 6b) angeordnet ist und ein innenverzahntes Hohlrad (4) als Abtriebselement aufweist, wobei an zumindest einem Gehäuseteil (6a; 6b) eine ringförmige Lagereinrichtung (70, 71, 72) ausgebildet ist, auf der das Abtriebselement (4) gelagert ist,
**dadurch gekennzeichnet,**
**daß** der äußere Umfang der ringförmigen Lagereinrichtung (70, 71, 72) dem inneren Umfang des als Hohlrad ausgebildeten Abtriebselementes (4) entspricht.

4. Antrieb nach einem der Ansprüche 1 bis 3, **dadurch gekennzeichnet, daß** die Lagereinrichtung (70, 71, 72) an dem Gehäuseteil (6a, 6b) angeformt ist.

5. Antrieb nach einem der voranstehenden Ansprüche, **dadurch gekennzeichnet, daß** die Lagereinrichtung (70, 71, 72) als Gleitlager ausgebildet ist.

6. Antrieb nach einem der voranstehenden Ansprüche, **dadurch gekennzeichnet, daß** das Getriebe (2) und der Motor (5) innerhalb des Gehäuses (6a, 6b) angeordnet sind.

7. Antrieb nach einem der voranstehenden Ansprüche, **dadurch gekennzeichnet, daß** ein Trägermodul oder Türinnenblech (90) als ein Gehäuseteil (6a; 6b) ausgebildet ist.

8. Antrieb nach Anspruch 7, **dadurch gekennzeichnet, daß** das Türinnenblech (90) oder Trägermodul Bestandteil des magnetischen Rückschlusses (51) ist.

9. Antrieb nach einem der voranstehenden Ansprüche, **dadurch gekennzeichnet, daß** zumindest eines der Gehäuseteile (6a, 6b) eine feststehende, als Hohlrad ausgebildete Innenverzahnung (60b) aufweist.

10. Antrieb nach Anspruch 9, **dadurch gekennzeichnet, daß** Getriebeelemente (20, 21, 23, 24, 25; 3a, 3b) zur Kraftübertragung auf das Abtriebselement (4) sowohl mit der Innenverzahnung (40) des Abtriebselementes (4) als auch mit zumindest einer der Innenverzahnungen (60b) der Gehäuseteile (6a, 6b) kämmen.

11. Antrieb nach Anspruch 9 oder 10, **dadurch gekennzeichnet, daß** die Zähnezahl der Innenverzahnung (40) des Abtriebselementes (4) von der Zähnezahl der Innenverzahnung (60b) der Gehäuseteile (6a, 6b) um zumindest einen Zahn verschieden ist.

12. Antrieb nach einem der Ansprüche 9 bis 11, **dadurch gekennzeichnet, daß** Verzahnungen der Getriebeelemente (20, 21, 23, 24, 25; 3a, 3b) sowohl in die Innenverzahnungen (60b) der Gehäuseteile (6a, 6b) als auch in die Innenverzahnung (40) des Abtriebselementes (4) eingreifen.

13. Antrieb nach einem der Ansprüche 9 bis 12, **dadurch gekennzeichnet, daß** die Innenverzahnung (60b) an zumindest einem der Gehäuseteile (6a; 6b) angeformt ist.

14. Antrieb nach einem der Ansprüche 9 bis 13, **dadurch gekennzeichnet, daß** zumindest eine Innenverzahnung (610) als ein Zahnkranz (61) ausgebildet ist, der drehfest in einem Gehäuseteil (6a; 6b) gelagert ist.

15. Antrieb nach Anspruch 14, **dadurch gekennzeichnet, daß** Verzahnungen der Getriebeelemente (20, 21, 23, 24, 25; 3a, 3b) in die Innenverzahnungen (60b) eines der Gehäuseteile (6a; 6b), in die Innenverzahnung (40) des Abtriebselementes (4) und in die Innenverzahnung (610) des Zahnkranzes (61) eingreifen.

16. Antrieb nach einem der voranstehenden Ansprüche, **dadurch gekennzeichnet, daß** das Abtriebselement (4) als Seiltrommel (41) ausgebildet ist oder eine Außenverzahnung aufweist.

17. Antrieb nach einem der voranstehenden Ansprüche, **dadurch gekennzeichnet, daß** die bewegbaren Getriebeelemente (1, 20, 21, 23, 24, 25, 26; 3a, 3b) des Zahnradgetriebes zur Kraftübertragung auf das Abtriebselement (4) innerhalb des Radiusses der Innenverzahnung (40) des Hohlrades (4) angeordnet sind.

18. Antrieb nach einem der voranstehenden Ansprüche, **dadurch gekennzeichnet, daß** das Zahnradgetriebe als Umlaufrädergetriebe in Kombination mit einem Wolfrom- oder Planetengetriebe ausgebildet ist.

19. Antrieb nach einem der Ansprüche 1 bis 17, **dadurch gekennzeichnet, daß** das Zahnradgetriebe als Umlaufrädergetriebe in Kombination mit einem Taumel- oder Harmonic-drive-Getriebe ausgebildet ist.

20. Antrieb nach Anspruch 19, **dadurch gekennzeichnet, daß** das Taumelgetriebe zwei um 180° versetzt angeordnete Taumelräder (3a, 3b) aufweist.

21. Antrieb nach einem der voranstehenden Ansprüche, **dadurch gekennzeichnet, daß** die axiale Ausdehnung der Getriebeelemente (1, 20, 21, 23, 24, 25, 26; 3a, 3b) kleiner oder gleich der maximalen axialen Ausdehnung des Abtriebselementes (4) ist.

22. Antrieb nach einem der voranstehenden Ansprüche, **dadurch gekennzeichnet, daß** die Verzahnungsbereiche der Getriebeelemente (20, 21, 23, 24, 25, 26; 3a, 3b) und/oder des Abtriebselementes (4) mit einer Kunststoffbeschichtung versehen sind.

23. Antrieb nach einem der voranstehenden Ansprüche, **dadurch gekennzeichnet, daß** der Motor (5) als Flachmotor ausgebildet ist.

24. Antrieb nach einem der voranstehenden Ansprüche, **dadurch gekennzeichnet, daß** die Komponenten des Antriebs (100) in einer Montagerichtung miteinander montierbar sind.

25. Antrieb nach einem der voranstehenden Ansprüche, **dadurch gekennzeichnet, daß** Mittel zur Bestromung des Motors (5) in einer Elektronikeinheit (7) vorgesehen sind, die durch Öffnungen (16) in dem Gehäuse mit dem Motor (5) verbindbar sind.

26. Antrieb nach einem der voranstehenden Ansprüche, **dadurch gekennzeichnet, daß** Sensorelemente in der Elektronikeinheit (7) vorgesehen sind, die durch Öffnungen (15) in dem Gehäuse mit dem Motor (5) oder dem Getriebe (2) gekoppelt sind.

## Claims

1. Driver for adjusting devices in motor vehicles, more particularly for a window lifter, with a motor (5) and a toothed wheel gearing (2) which is coupled to the motor (5) and which is mounted in an at least two-part housing (6a,6b) and has an internally toothed hollow wheel (4) as output element wherein on at least one housing part (6a, 6b) a bearing device (70, 71, 72) is formed on which the output element (4) is mounted,
**characterised in that**
the bearing device (70,71,72) is mounted on the housing part (6a, 6b) in an area between the internal toothing (40) and the outer radius of the output element (4).

2. Drive according to claim 1, **characterised in that** the bearing device (70) is formed as a ring-shaped groove (71) or as a guide element (72) projecting into the output element (4).

3. Drive for adjusting devices in motor vehicles, more particularly for a window lifter, with a motor (5) and a toothed wheel gearing (2) which is coupled to the motor (5) and is mounted in an at least two-part housing (6a, 6b) and has an internally toothed hollow wheel (4) as the output element wherein on at least one housing part (6a, 6b) a ring-shaped bearing device (70, 71, 72) is formed on which the output element (4) is mounted,
**characterised in that**
the outer periphery of the ring-shaped bearing device (70, 71, 72) corresponds to the internal periphery of the output element (4) which is formed as the hollow wheel.

4. Device according to one of claims 1 to 3, **characterised in that** the bearing device (70,71, 72) is moulded on the housing part (6a, 6b).

5. Drive according to one of the preceding claims, **characterised in that** the bearing device (70,71, 72) is designed as a slide bearing.

6. Drive according to one of the preceding claims, **characterised in that** the gearing (2) and the motor (5) are mounted inside the housing (6a, 6b).

7. Drive according to one of the preceding claims, **characterised in that** a support module or door inside panel (90) is designed as a housing part (6a; 6b).

8. Drive according to claim 7, **characterised in that** the door inside panel (90) or support module is a constituent part of the magnetic return path (51).

9. Drive according to one of the preceding claims, **characterised in that** at least one of the housing parts (6a, 6b) has a fixed internal toothing (60b) formed as a hollow wheel.

10. Drive according to claim 9, **characterised in that** the gearing elements (20, 21, 23, 24, 25 ; 3a, 3b) for transferring force to the output element (4) mesh both with the internal toothing (40)of the output element (4) and also with at least one of the internal toothings (60b) of the housing parts (6a, 6b).

11. Drive according to claim 9 or 10, **characterised in that** the number of teeth of the internal toothing (40) of the output element (4) is different from the number of teeth of the internal toothing (60b) of the housing parts (6a, 6b) by at least one tooth.

12. Drive according to one of claims 9 to 11, **characterised in that** teeth of the gearing elements (20, 21, 23, 24, 25; 3a, 3b) engage both in the internal toothings (60b)of the housing parts (6a, 6b) and in the internal toothing (40) of the output element (4).

13. Drive according to one of claims 9 to 12, **characterised in that** the internal toothing (60b) is formed on at least one of the housing parts (6a; 6b).

14. Drive according to one of claims 9 to 13, **characterised in that** at least one internal toothing (610) is formed as a toothed rim (61) which is mounted rotationally secured in a housing part (6a; 6b).

15. Drive according to claim 14, **characterised in that** teeth of the gearing elements (20, 21, 23, 24, 25; 3a, 3b) engage in the internal toothings (60b) of one of the housing parts (6a; 6b), in the internal toothing (40) of the output element (4) and in the internal toothing (610) of the toothed rim (61).

16. Drive according to one of the preceding claims, **characterised in that** the output element (4) is formed as a cable drum (41) or has external toothing.

17. Drive according to one of the preceding claims, **characterised in that** the movable gearing elements (1, 20, 21, 23, 24, 25, 26; 3a, 3b) of the toothed wheel gearing for transferring force to the output element (4) are mounted inside the radius of the internal toothing (40) of the hollow wheel (4).

18. Drive according to one of the preceding claims, **characterised in that** the toothed wheel gearing is formed as a planetary gear train in combination with a Wolfrom or planetary gearing.

19. Drive according to one of claims 1 to 17, **characterised in that** the toothed wheel gearing is designed as a planetary gear train in combination with a tumbler or harmonic-drive gearing.

20. Drive according to claim 19, **characterised in that** the tumbler gearing has two tumbler wheels (3a, 3b) arranged off-set by 180°.

21. Drive according to one of the preceding claims, **characterised in that** the axial extension of the gearing elements (1, 20, 21, 23, 24, 25, 26; 3a, 3b) is smaller than or equal to the maximum axial extension of the output element (4).

22. Drive according to one of the preceding claims, **characterised in that** the toothed areas of the gearing elements (20, 21, 23, 24, 25, 26; 3a, 3b) and/or of the output element (4) are provided with a plastics coating.

23. Drive according to one of the preceding claims, **characterised in that** the motor (5) is designed as a thin profile motor.

24. Drive according to one of the preceding claims, **characterised in that** the components of the drive (100) can be fitted to one another in one assembly direction.

25. Drive according to one of the preceding claims, **characterised in that** means for supplying current to the motor (5) are provided in an electronic unit (7) which can be connected to the motor (5) through openings (16) in the housing.

26. Drive according to one of the preceding claims, **characterised in that** sensor elements are provided in the electronic unit (7) and are coupled to the motor (5) or to the gearing (2) through openings (15) in the housing.

## Revendications

1. Mécanisme de commande pour dispositifs de réglage dans des véhicules automobiles, particulièrement pour un lève-vitres, avec un moteur (5) et un engrenage à denture (2) couplé au moteur (5) qui est placé dans un carter (6a, 6b) ayant au moins deux parties et présente une roue (4) à denture intérieure comme élément de sortie, dans lequel sur au moins une partie de carter (6a, 6b), un dispositif de palier (70, 71, 72) est formé sur lequel l'élément de sortie (4) est disposé,
**caractérisé en ce que** le dispositif de palier (70, 71, 72) est disposé sur la partie de carter (6a, 6b) dans une zone entre la denture interne (40) et le rayon externe de l'élément de sortie (4).

2. Mécanisme de commande selon la revendication 1,
**caractérisé en ce que** le dispositif de palier (70) a la forme d'une gorge annulaire (71) ou d'un élément de guidage (72) faisant saillie dans l'élément de sortie (4).

3. Mécanisme de commande pour dispositifs de réglage dans des véhicules automobiles, particulièrement pour un lève-vitres, avec un moteur (5) et un engrenage à denture (2) couplé au moteur (5) qui est placé dans un carter (6a, 6b) ayant au moins deux parties et présente une roue (4) à denture intérieure comme élément de sortie, moyennant quoi sur au moins une partie de carter (6a, 6b), un dispositif de palier (70, 71, 72) annulaire est formé sur lequel l'élément de sortie (4) est disposé,
**caractérisé en ce que** le périmètre extérieur du dispositif de palier annulaire (70, 71, 72) correspond au périmètre intérieur de l'élément de sortie (4) formé comme une roue à denture intérieure.

4. Mécanisme de commande selon l'une des revendications 1 à 3,
**caractérisé en ce que** le dispositif de palier annulaire (70, 71, 72) est formé sur la partie de carter (6a, 6b).

5. Mécanisme de commande selon l'une des revendications précédentes,
**caractérisé en ce que** le dispositif de palier annulaire (70, 71, 72) est un palier lisse.

6. Mécanisme de commande selon l'une des revendications précédentes,
**caractérisé en ce que** l'engrenage (2) et le moteur (5) sont disposés à l'intérieur du carter (6a, 6b).

7. Mécanisme de commande selon l'une des revendications précédentes,
**caractérisé en ce qu'**un module de support ou un panneau intérieur de porte (90) est une partie de carter (6a, 6b).

8. Mécanisme de commande selon la revendication 7,
**caractérisé en ce que** le panneau intérieur de porte (90) ou le module de support fait partie du blindage magnétique (51).

9. Mécanisme de commande selon l'une des revendications précédentes,
**caractérisé en ce qu'**au moins une des partie de carter (6a, 6b) présente une denture interne (60b) fixe réalisée comme une roue à denture intérieure.

10. Mécanisme de commande selon la revendication 9,
**caractérisé en ce que** des éléments d'engrenage (20, 21, 23, 24, 25 ; 3a, 3b) s'engrènent tant avec la denture interne (40) de l'élément de sortie (4) qu'avec au moins l'une des dentures internes (60b) des parties de carter (6a, 6b) pour la transmission de force sur l'élément de sortie (4).

11. Mécanisme de commande selon la revendication 9 ou 10,
**caractérisé en ce que** le nombre de dents de la denture interne (40) de l'élément de sortie (4) est différent d'au moins une dent du nombre de dents de la denture interne (60b) des parties de carter (6a, 6b).

12. Mécanisme de commande selon la revendication 9 à 11,
**caractérisé en ce que** des dentures des éléments d'engrenage (20, 21, 23, 24, 25 ; 3a, 3b) viennent en engagement tant dans les dentures internes (60b) des parties de carter (6a, 6b) que dans la denture interne (40) de l'élément de sortie (4).

13. Mécanisme de commande selon l'une des revendications 9 à 12,
**caractérisé en ce que** la denture interne (60b) est formée sur au moins l'une des parties de carter (6a, 6b).

14. Mécanisme de commande selon l'une des revendications 9 à 13,
**caractérisé en ce qu'**au moins une denture interne (610) est formée comme une couronne dentée (61) positionnée de manière bloquée en rotation dans une partie de carter (6a, 6b).

15. Mécanisme de commande selon la revendication 14,
**caractérisé en ce que** des dentures des éléments d'engrenage (20, 21, 23, 24, 25 ; 3a, 3b) viennent en engagement dans les dentures internes (60b) d'une des parties de carter (6a, 6b), dans la denture interne (40) de l'élément de sortie (4) et dans la denture interne (610) de la couronne dentée (61).

16. Mécanisme de commande selon l'une des revendications précédentes,
**caractérisé en ce que** l'élément de sortie (4) est un tambour à câble (41) ou présente une denture externe.

17. Mécanisme de commande selon l'une des revendications précédentes,
**caractérisé en ce que** les éléments d'engrenage mobiles (1, 20, 21, 23, 24, 25, 26 ; 3a, 3b) de l'engrenage à denture sont disposés à l'intérieur du rayon de la denture interne (40) de la roue à denture interne (4) pour la transmission de force à l'élément de sortie (4).

18. Mécanisme de commande selon l'une des revendications précédentes,
**caractérisé en ce que** l'engrenage à denture est un engrenage épicycloïdal en combinaison avec un engrenage Wolfrom ou un engrenage planétaire.

19. Mécanisme de commande selon l'une des revendications 1 à 17,
**caractérisé en ce que** l'engrenage à denture est un engrenage épicycloïdal en combinaison avec une boîte de transmission oscillante ou à démultiplicateur harmonique.

20. Mécanisme de commande selon la revendication 19,
**caractérisé en ce que** la boîte de transmission oscillante présente deux roues oscillantes (3a, 3b) placées en étant décalées de 180°.

21. Mécanisme de commande selon l'une des revendications précédentes,
**caractérisé en ce que** l'expansion axiale des éléments d'engrenage (1, 20, 21, 23, 24, 25, 26 ; 3a, 3b) est inférieure ou égale à l'expansion axiale maximale de l'élément d'entraînement (4).

22. Mécanisme de commande selon l'une des revendications précédentes,
**caractérisé en ce que** les zones de denture des éléments d'engrenage (20, 21, 23, 24, 25, 26; 3a, 3b) et/ou de l'élément de sortie (4) sont recouvertes de plastique.

23. Mécanisme de commande selon l'une des revendications précédentes,
**caractérisé en ce que** le moteur (5) est un moteur plat.

24. Mécanisme de commande selon l'une des revendications précédentes,
**caractérisé en ce que** les composants du mécanisme de commande (100) peuvent être montés les uns avec les autres dans un sens de montage.

25. Mécanisme de commande selon l'une des revendications précédentes,
**caractérisé en ce que** des moyens d'alimentation électrique du moteur (5) sont prévus dans une unité électronique (7) qui peuvent être reliés au moteur (5) par des ouvertures (16) dans le carter.

26. Mécanisme de commande selon l'une des revendications précédentes,
**caractérisé en ce que** des éléments de capteur sont prévus dans l'unité électronique (7) qui sont couplés au moteur (5) ou à l'engrenage (2) par des ouvertures (15) dans le carter.
